# EUROPEAN PATENT SPECIFICATION

(11) **EP 1 918 541 B1**
(45) Date of publication and mention of the grant of the patent: **25.02.2009**
(21) Application number: 07021146.1
(22) Date of filing: 30.10.2007
(51) Int. Cl.: F01N 3/023, F01N 9/00

(54) **Operating method for a particulate filter, data processor program product and control apparatus therefore**
Betriebsverfahren für einen Teilchenfilter, Datenverarbeitungsprogramm und Steuerungsvorrichtung dafür
Procédé de fonctionnement pour un filtre particulier, produit de programme de processeur de données et appareil de contrôle correspondant

(30) Priority: 06.11.2006 EP 06022996
(43) Date of publication of application: 07.05.2008
(73) Proprietor: GM Global Technology Operations, Inc., Detroit, MI 48265-3000 (US)
(72) Inventor: Barbero, Simone, Torino (IT); Cassani, Stefano, 10128 Torino (IT); Mercuri, Davide, 10139 Torino (IT); Rellecati, Pierluigi, 10140 Cumiana (IT)
(74) Representative: Strauss, Peter

(56) References cited:
- EP-A- 1 316 707
- EP-A- 1 662 101
- DE-A1- 10 144 958

## Description

The present invention relates to a method for operating a particulate filter in the exhaust system of an internal combustion engine, to a data processor program product and to a control apparatus for carrying out the method.

Filters capable of reducing emission of particulate matter from diesel engines have attracted considerable public interest in recent times. Such filters generally comprise a filter body of porous material within a casing, often with dead-end holes extending into the filter body from opposite sites thereof. In operation, exhaust gas enters the dead-end holes from one side of the filter body and passes through the filter material into the holes of the other side, whereby the particulate matter carried by the exhaust gas is retained at the surface and in the pores of the filter body. The accumulating particulate matter causes a pressure drop across the filter to increase. If the pressure drop becomes excessive, it may cause the filter body to crack, rendering the filter ineffective, or it may affect the efficiency of the engine.

In order to avoid excessive clogging of the filter, the particulate matter must be removed when a critical amount of it has accumulated in the filter. This process is generally referred to as regeneration. Conventionally, regeneration is achieved by heating the filter to a temperature at which the accumulated particulate matter burns off, leaving the filter body clean again. It is known from WO2004/081360 A1 to heat the filter by injecting excess fuel into a combustion chamber of the engine when the piston of the combustion chamber has passed its top dead centre position, and fuel that was injected before the top dead centre position is already burnt. The fuel injected after the top dead centre position, referred to as post-injected fuel in the following description, is ejected from the combustion chamber unburnt, and reaches an exhaust catalyst which is conventionally provided for degrading residual hydrocarbons and nitric oxides that are formed in the combustion process of the engine. Such a catalyst is also effective to oxidise the post-injected fuel. The catalytic oxidation of the post-injected fuel heats the exhaust gas which reaches the particulate filter, whereby the latter is heated.

This conventional technology has a number of inconveniences. First, fuel is consumed for regenerating the filter, so that the average fuel consumption per distance unit of a motor vehicle is increased by the use of a regenerative particulate filter.

If a vehicle engine comes into a low idle state, e. g. due to waiting before a traffic light or in a traffic jam, during a filter regeneration, a considerable amount of fuel is required for keeping the filter in a temperature range suitable for burning the particulate matter. However, post-injection of a large amount of fuel causes the engine lubricant to be indesirably diluted by the fuel.

If the engine happens to be turned off during filter regeneration, all the filter cools down, and regeneration comes to a halt before the particulate matter is completely removed. If normal filtering operation is resumed after turning the engine on again, the effectiveness of the particulate filter may be degraded, because one region of it may be fully regenerated, whereas another region of it is still clogged. On the other hand, resuming regeneration of the filter when the engine is turned on again is also difficult, since hot exhaust gas will mainly pass through the clean regions of the filter, where it has no effect, whereas clogged regions tend to remain cooler.

When the particulate filter has been heated, and combustion of the particles accumulated in it begins, additional heat is produced by this combustion, and there is a risk, in particular if the particle load in the filter is high, that in some region of the filter the temperature will rise to a level at which the filter is damaged.

DE 101 44 958 A1 discloses a method for regenerating a particulate filter in which the temperature within the filter is monitored and the oxygen content of exhaust gas admitted into the filter is reduced if the temperature rises above a threshold. In this way, the speed of combustion of the particles is reduced, and so is the heating power released by the combustion. Outside energy must still be supplied in order to keep the combustion going, and the longer the combustion takes, the higher is the amount of this energy.

The object of the present invention is to provide a filter operating method in which the amount of energy required for regenerating the filter and/or the risk of overheating the filter during regeneration is reduced.

The object is achieved by a method for operating a particulate filter in the exhaust system of an internal combustion engine, the method comprising a filtering phase in which particles from exhaust gas of the combustion engine are collected in the filter, and a filter cleaning phase in which the filter is held in a temperature range in which particles collected in the filter are burnt, wherein the filter cleaning phase comprises a main portion and an ignition portion prior to said main portion, and the temperature at an input port of the filter is controlled to be lower at the beginning of the main portion than in the ignition portion. This method takes account of the fact that once the process of burning the collected particles has started, heat generated by burning part of the particles helps to bring the remaining particles to a temperature at which they will burn, so that this heat need no longer be supplied from outside. Accordingly, the amount of post-injected fuel needed for cleaning the filter is decreased by lowering the filter temperature at the beginning of the main portion without affecting the efficiency of the regeneration.

A duration of the ignition portion of not more than one minute, preferably approximately 30 s, was found to be adequate.

Preferably, the filter temperature during the ignition portion is at least 50°C higher than at the beginning of the main portion.

According to preferred embodiment of the invention, during the main portion of the filter cleaning phase, the temperature at an input port of the filter is gradually raised.

This feature takes advantage of the effect, that when the particulate matter load in the filter is high, a temperature required for keeping the combustion process going is rather low, since heat generated by burning a particle is quite efficiently transferred to a nearby particle, causing it to burn, too. When the concentration of the particles in the filter decreases, this type of heat transfer tends to become less effective, so that more outside heat is required to keep the combustion going. So, if the filter temperature was controlled to be constant all over the filter cleaning phase, this temperature would have to be chosen high enough to keep the particle combustion process going until the end, which implies that in the beginning the filter temperature and, hence, the amount of fuel invested for obtaining it, is higher than necessary. Accordingly, when compared to a conventional filter regeneration method in which the filter temperature is held constant all over the filter cleaning phase, the amount of fuel needed for cleaning the filter may be reduced by setting the filter temperature lower than the conventional constant value at the beginning of the main portion of the filter cleaning phase, and/or a more thorough cleaning action may be achieved by making the filter temperature higher than the conventional constant value near the end of the filter cleaning phase.

It has proved useful to increase the filter temperature during said main portion of the filter cleaning phase by at least 100°C, preferably at least 150°C.

At the beginning of the main portion of the filter cleaning phase, the filter temperature may be in a range of 530 to 580°C.

At the end of said main portion, the filter temperature may be above 700°C, preferably around 750°C.

Conventionally, the particle load of the filter is estimated during the filtering phase in order to judge when a regeneration of the filter becomes necessary. According to the present invention, this particle load is estimated also during regeneration, in order to make sure that the filter temperature is always adapted to the actual particle load. This is convenient not only for keeping the amount of fuel spent for cleaning the filter at a minimum during regeneration, it also helps to set an adequate temperature for the filter in case of a regeneration being started at variable particle loads. Such variable loads may occur e. g. if a filter regeneration is restarted when the engine is turned on again after a halt. An other possibility is that filter regeneration may be started at a rather low particle load if it is detected that the engine is operating at a high load and with high air flow, so that the amount of post-injected fuel required for regenerating the filter is rather low, whereas in case of the engine operating at a low load and low air flow, start of a regeneration may be delayed until a larger quantity of particles has accumulated, since in this case the amount of fuel needed for a regeneration is rather high.

As has been pointed out above already, simply resuming upon turn-on of the engine a filter cleaning phase that was interrupted by a turn-off of the engine at a constant temperature may lead to unsatisfying results. According to the present invention, however, such an interrupted filter cleaning phase may conveniently be restarted, i. e. since the particle load of the filter is estimated and a target value for the filter temperature is set according to the estimated particle load, the filter temperature will reach a value again at which the interrupted combustion of the particles may restart. For best results, the ignition portion of the filter cleaning phase is conveniently repeated upon restart.

If the filter cleaning phase has been interrupted, it is preferably decided to restart or not to restart the filter cleaning phase according to an estimated particle load at the time (t2b, t2c) of interruption. This may be done directly by calculating the particle load at the time of interruption; it can also be done indirectly by judging whether the duration of the cleaning phase before interruption is more than a predetermined fraction of the expected total duration of the cleaning phase.

The filter may be heated by burning residual fuel contained in the exhaust gas from the engine in a catalyst located in the exhaust system between the engine and the particulate filter. The amount of residual fuel is preferably controlled using a closed control loop in which the filter temperature is compared to a pre-set target temperature. The development of the filter temperature defined above may then easily be achieved by gradually raising the preset target temperature during the main portion of the filter cleaning phase and/or setting said target temperature lower at the beginning of the main portion than in the ignition portion.

In order to avoid large quantities of fuel being spent in filter regeneration if the engine is in a low idle state, the method of the invention advantageously comprises a step of judging whether the engine is in a low idle state or in a load state, and, if the engine is detected to be in the low idle state, setting the target temperature lower than in the load state. In this way, during the low idle state, the speed at which the particles are burnt may be decreased, or particle combustion may come to a halt, but when the engine returns to the load state, filter regeneration may be resumed quickly and at low fuel expense. In this way undesirable dilution of engine lubricant by fuel is avoided, too.

It is also advantageous to gradually decrease the target temperature during the low idle state. An abrupt change of the target temperature would cause an abrupt variation of the quantity of post-injected fuel, which might cause a high level of hydrocarbon emission from the exhaust system. For the same reason, it is advisable to increase the target temperature gradually when the engine returns from the low idle state to the load state and regeneration is resumed.

According to a second aspect of the invention, the object is achieved by a data processor program product comprising a data carrier in which program instructions for enabling a data processor to carry out one of the above-defined methods are recorded in machine-readable form.

According to a third aspect of the invention, the object is achieved by a control apparatus for controlling operation of a particulate filter in the exhaust system of an internal combustion engine so that the operation comprises a filtering phase in which particles from exhaust gas of the combustion engine are collected in the filter, and a filter cleaning phase in which the filter is held in a temperature range in which particles collected in the filter are burnt, which is characterized in that the control apparatus is adapted to control the temperature of the filter to be lower at the beginning of a main portion of the filter cleaning phase than in an ignition portion of the filter cleaning phase prior to said main portion.

According to a preferred embodiment, the control apparatus is adapted to raise gradually the temperature of the filter at least during a main portion of the filter cleaning phase.

Further features and advantages of the invention will become apparent from the subsequent description of embodiments thereof referring to the appended drawings.
- Fig. 1: is a diagram of a combustion engine in which the present invention is implemented;
- Fig. 2: is a block diagram of part of the logical structure of the electronic control unit shown in Fig. 1;
- Fig. 3: is a graph illustrating the development of target temperature and measured temperature of the particulate filter of Fig. 1 during a filter regeneration; and
- Fig. 4: is a graph analogous to Fig. 3 illustrating an interrupted regeneration process.

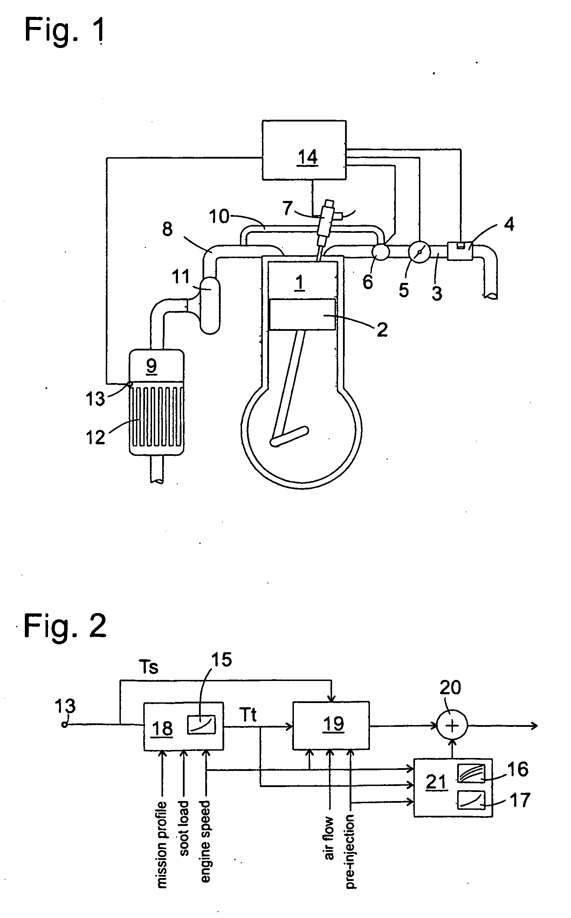

Fig. 1 schematically illustrates a Diesel engine and its exhaust system, to which the present invention is applicable. The engine has a plurality of combustion chambers 1 in which a piston 2 reciprocates, and to which fresh air is supplied by an intake manifold 3. Along the intake manifold 3, there is located an air flow meter 4, a throttle valve 5 and an exhaust gas recirculation (EGR) valve 6. A fuel injection valve 7 is connected to a common rail, not shown.

An exhaust duct 8 extends from the combustion chambers 1 to an exhaust catalyst 9. An exhaust recirculation line 10 extends from exhaust duct 8 to EGR valve 6. A turbine 11 for driving an intake air compressor, not shown, may be located in exhaust duct 8.

In the schematic representation of Fig. 1, the exhaust catalyst 9 is represented as a single block. In practice, it may be divided into two separate units, a pre-catalyst which is small-sized and located physically close to the engine in order to reach operating temperature quickly after engine start-up, and a main catalyst located further downstream, of larger size and capable of processing the exhaust gas from the engine without overheating even at high engine loads.

Catalyst 9 degrades residual hydrocarbons, nitric oxides and carbon monoxide contained in the exhaust stream. Particles such as soot contained in the exhaust stream pass catalyst 9 essentially unaffected.

A particulate filter 12 is located downstream of catalyst 9 for collecting these particles from the exhaust stream. Particulate filter 12 is placed in a common casing together with the main catalyst, in order to enable efficient heating of particulate filter 12 by heat from catalytic reactions occurring in catalyst 9.

Particulate filter 12 comprises a body of porous material into which dead-end holes extend from upstream and downstream sides thereof, respectively. When the engine is running, soot particles are at first collected within the pores of the filter material, and, in a later stage, a layer of collected particles begins to build up on the walls of the upstream holes.

The ECU 14 controls fuel injection into the combustion chamber 1 by injection valve 7, throttle valve 5 position and the amount of exhaust gas recirculation at EGR valve 6 based on an air flow rate detected at air flow meter 4, engine speed, accelerator pedal position, etc. Since these functions of the ECU 14 are known to the man of the art, they need not be described further here.

The ECU 14 monitors the clogging state of particulate filter 12 essentially based on the history of running conditions of the engine. The rate at which particles are generated by the engine is a function mainly of engine speed and torque. In addition to these two, one or more of the following parameters may be taken into account: engine temperature, ambient temperature, gear, vehicle speed. By monitoring these parameters as a function of time, the ECU 14 estimates the particle generation rate of the engine and, by integrating this particle generation rate, it obtains an estimate of the particle load in filter 12 at any given time. If this particle load exceeds a predetermined threshold, a regeneration of the particulate filter 12 is necessary, in which the collected particles are burnt. In order to raise the temperature of particulate filter 12 to a level necessary for burning the particles, ECU 14 controls fuel injection valve 7 to inject a needed quantity of fuel into combustion chamber 1 when its piston 2 has passed its top dead centre position. This post-injected fuel is purged from combustion chamber 1 without being burnt, so that it is oxidised in catalyst 9, thus increasing the temperature of the exhaust gas arriving at particulate filter 12. This temperature Ts is monitored by a temperature sensor 13 at the upstream side of filter 12.

Fig. 2 illustrates the structure of a portion of ECU 14 which determines the amount of post-injected fuel. As a skilled person will immediately recognize, the components shown in this Fig. may be implemented in hard-or software. Quite conventionally, a characteristic 16 is stored in the an open-loop controller unit 21 of ECU 14 which indicates an amount of post-injected fuel per engine stroke necessary for achieving a typical regeneration temperature of filter 12 of e. g. 650°C as a function of engine speed and pre-injected fuel amount, i. e. the amount of fuel which is injected before top dead centre position and which is actually burnt in combustion chamber 1. According to the invention, there is also stored a second characteristic 17 which indicates a percentage of the post injection quantity given by the first characteristic 16 which is needed for achieving other temperatures of filter 12.

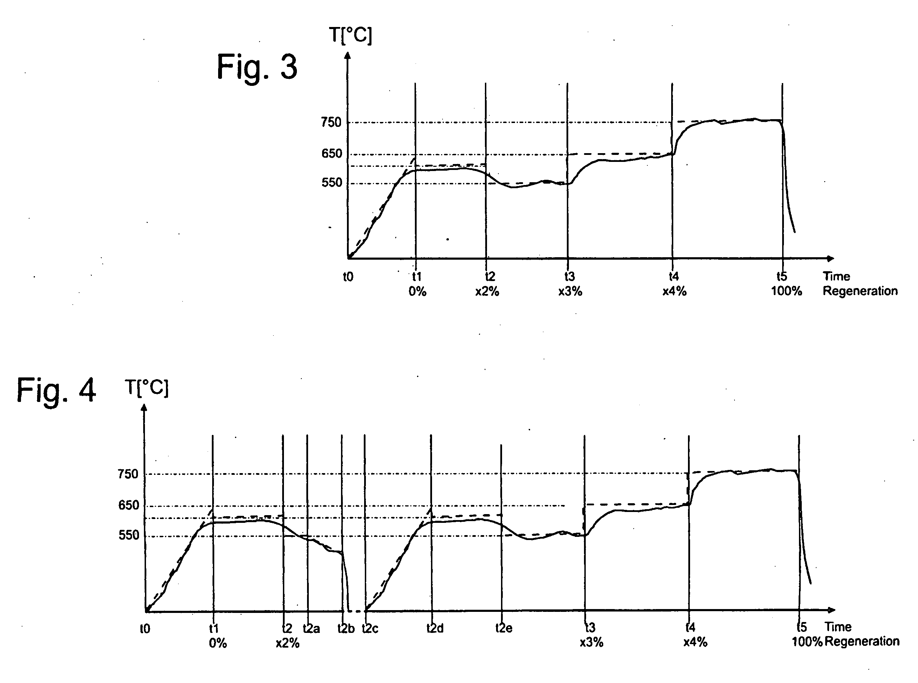

The ECU 14 comprises a target temperature setting unit 18 which determines a target temperature Tt to which the filter 12 is to be heated during regeneration based on a current filter temperature from temperature sensor 13, engine speed, an estimated current soot load of filter 12 and a mission profile of the vehicle in a way which will be explained in more detail later referring to Fig. 3 and 4. Temperature setting unit 18 stores a third characteristic 15 which specifies soot loss rates or total soot loss during regeneration. Soot loss rates or soot loss may be specified in characteristic 15 as a function of filter temperature Ts, air flow, total fuel injection quantities (preplus post-injection) etc., or, alternatively, as a function of time and mission profile, based on the assumption that the filter temperature is controlled to follow a predetermined curve during regeneration.

The target temperature Tt determined by unit 18 and the current temperature Ts from sensor 13 are supplied to a closed loop controller unit 19 which determines a post injection correction amount based on these two temperatures, engine air flow and/or engine speed and fuel pre-injection amount. Adder 20 adds this correction amount to an open loop post-injection quantity determined by open loop controller unit 21 based on engine speed, pre-injection amount and target temperature using first and second characteristics 16, 17. The total post-injection quantity defined by the output of adder 20 is metered into combustion chamber 1 at each engine stroke.

Fig. 3 illustrates the development of the target temperature determined by unit 18 and of the current filter temperature measured by sensor 13 during a filter regeneration procedure. The time at which ECU 14 starts the regeneration procedure is referred to as t0. Regeneration starts with a filter warming-up phase from t0 to t1. At t0, target temperature setting unit 18 sets a target temperature Tt for the filter 12 identical to the current temperature Ts from sensor 13. From this starting value, target temperature Tt is ramped up to e. g. 650°C at time t1. Between t0 and t1, the target temperature Tt may increase in a linear fashion with time, or the rate of increase of Tt may slow down at high temperatures Ts, in order to avoid any overshoot of the filter temperature Ts over the target temperature Tt at t1. The rate at which the target temperature Tt is increased during the warming-up phase is determined based on the mission profile of the vehicle, i.e. if the ECU 14 has observed before t0 that the vehicle is running intermittently at low engine speed and torque, corresponding e. g. to urban stop-and-go traffic, the increase rate of the target temperature is set lower than in case of the vehicle running at high speed and torque corresponding e. g. to highway driving. In this way, a fast rise of filter temperature Ts is achieved during highway driving, whereas in urban traffic, where such a fast temperature rise would imply high post-injection quantities leading to undesirable oil dilution and to a high rate of hydrocarbon emission from the exhaust system, post-injection quantities are kept reasonably low, allowing a longer time for heating the filter 12.

By continuously increasing the target temperature Tt, closed loop control of the post-injection quantity can be carried out right from the beginning of the regeneration procedure without a risk of excessive post-injection quantities causing oil dilution and a filter temperature overshoot, and the actual filter temperature Ts follows the target temperature Tt closely at all times. In this way, an appropriate filter temperature for burning the collected soot is reached quickly and reliably.

As a safety measure, it can be provided that the target temperature setting unit 18 continuously monitors the current filter temperature Ts from sensor 13 and interrupts the increase of the target temperature Tt in case of the difference between the two temperatures Tt, Ts exceeding a predetermined threshold. This measure is also effective to prevent post-injection of excessive quantities of fuel.

At time t1, target temperature setting unit 18 decreases the target temperature slightly, in this example from 650°C to 630°C. Setting the target temperature at the end of the warming-up phase slightly higher than in the subsequent ignition phase starting at time t1 is useful to bring the filter temperature quickly to the level which is actually desired for the ignition phase.

The duration of the ignition phase may be time controlled or soot load controlled, i.e. according to a first embodiment of the invention the duration t2-t1 of the ignition phase is predetermined, and according to a second embodiment the ECU 14 terminates the ignition phase at a time t2 when the target temperature setting unit 18 estimates, based on characteristic 15, that a given percentage x2 of soot has been removed. Soot combustion may now be assumed to be under progress, so that the heat generated by it keeps the combustion process going, even if the heat of the exhaust gas into filter 12 is reduced. Accordingly, target temperature setting unit 18 decreases the target temperature at time t2 to e. g. 550 °C. This measure not only avoids unnecessary consumption of fuel, it is also effective to control the speed of the soot combustion process and prevents local overheating of the filter body in a region where the soot concentration is high.

When the soot in filter 12 is gradually consumed, its combustion contributes less and less heat, so that in order to avoid a premature stop of the regeneration, unit 18 increases the target temperature to 650°C again at instant t3 (i.e. when a predetermined time t3-t2 has elapsed since instant t2 according to the first embodiment, or when the target temperature setting unit 18 estimates that a percentage x3 of the soot is consumed, according to the second embodiment).

A further increase of the target temperature, and, in consequence, of the filter temperature at sensor 13 occurs at instant t4 (or percentage x4). By setting the target temperature in the final stage of the regeneration lasting from t4 to t5 at a rather high value of 750°C, the soot is removed very completely. It should be noted that near the end of the regeneration process the target temperature can be raised to a value which, at the beginning of the regeneration, might cause the filter to overheat in a region where a large quantity of soot is burnt in a short time.

When a regeneration is started, there is always a risk of vehicle running conditions not being adequate for regeneration while the regeneration process lasts. Such a case will be discussed referring to Fig. 4, which shows a graph of target and actual filter temperatures Ts, Tt analogous to that of Fig. 3. Warming-up and ignition phases of the regeneration process of Fig. 4 are identical to those of Fig. 3. At an instant t2a, the vehicle enters a low idle state, which is not well suited for regeneration due to the high quantity of post-injected fuel necessary to maintain the target temperature Tt. With a predetermined delay after entering the low idle state, the unit 18 therefore gradually decreases the target temperature Tt. This reduces the post-injection quantity, but also the speed at which the soot is being burnt in the filter. However, since the filter 12 is kept warm, regeneration may be resumed quickly, as soon as the vehicle leaves the low idle state and runs under higher load again. In the case of Fig. 4, however, the engine is switched off at time t2b, and the filter 12 cools down.

At instant t2b, or at instant t2c, when the engine is switched on again, ECU 14 calculates the residual quantity of soot that is left in filter 12 based on characteristic 15. If the regeneration before switch-off lasted long enough to remove a substantial fraction of the soot, it is not urgent to restart regeneration. In that case, ECU 14 reverts to its normal operation mode of monitoring the particle load in filter 12 by integrating the particle generation rate, taking the above-mentioned residual quantity as a starting value, and regeneration is restarted as described referring to Fig. 3 when this particle load exceeds its predetermined threshold. On the other hand, if the regeneration time before t2a was too short to remove a predetermined substantial amount of soot, or if it was less than a predetermined fraction of the expected total regeneration time, ECU 14 decides at instant t2c that regeneration is necessary and begins regeneration either immediately or as soon as the vehicle is detected to be in an appropriate mission profile. In that case, as shown in Fig. 4, the temperature curve of the regeneration process of Fig. 3 is repeated completely and identically from t2c to t5.

In the diagrams of Fig. 3 and 4, the target temperature Tt is shown to change abruptly at instants t1, t2, t3, t4, t5. Of course, instead of such an abrupt step, a continuous change of temperature as between instants t0 and t1 might be provided. It is also conceivable to have the target temperature Tt increasing continuously all over the soot burning time from t2 to t5.

### Reference signs

- combustion chamber: 1
- piston: 2
- intake manifold: 3
- air flow meter: 4
- throttle valve: 5
- EGR valve: 6
- fuel injection valve: 7
- exhaust duct: 8
- exhaust catalyst: 9
- exhaust reduction line: 10
- turbine: 11
- particulate filter: 12
- temperature sensor: 13
- ECU: 14
- characteristics: 15, 16, 17
- temperature setting unit: 18
- closed loop controller unit: 19
- adder: 20
- open-loop controller unit: 21

## Claims

1. A method for operating a particulate filter (12) in the exhaust system of an internal combustion engine, comprising a filtering phase in which particles from exhaust gas of the combustion engine are collected in the filter (12), and a filter cleaning phase (t1-t5) in which the filter (12) is held in a temperature range in which particles collected in the filter (12) are burnt, **characterized in that** the filter cleaning phase (t1-t5) comprises a main portion (t2-t5) and an ignition portion (t1-t2), at which soot combustion is assumed to be under progress, prior to said main portion (t2-t5), and that the temperature (Ts) at an input port of the filter (12) is controlled to be lower at the beginning (t2-t3) of the main portion (t2-t5) than in the ignition portion (t1-t2).

2. The method of claim 1, wherein the duration of said ignition portion (t1-t2) is not more than one minute.

3. The method of claim 1 or 2, wherein the filter temperature (Ts) during said ignition portion (t1-t2) is at least 50°C higher than at the beginning (t2-t3) of the main portion.

4. The method of one of claims 1 to 3, wherein a filter cleaning phase that was interrupted (t2b) by a turn-off of the engine is restarted (t2c) after turn-on of the engine.

5. The method of claim 4, wherein upon turn-on of the engine it is decided to restart or not to restart the filter cleaning phase according to an estimated particle load at the time (t2b, t2c) of interruption.

6. The method of one of the preceding claims wherein the particle load of the filter (12) is estimated and a target value (Tt) for the filter, temperature (Ts) is set according to the estimated particle load.

7. The method of one of the preceding claims, wherein the filter (12) is heated by burning residual fuel contained in the exhaust gas from the engine in a catalyst (9) located in the exhaust system between the engine and the particulate filter (12) .

8. The method of claim 7, wherein the amount of residual fuel is controlled by metering fuel into a combustion chamber (1) of the engine after ignition.

9. The method of claim 7 or 8, wherein the amount of residual fuel is controlled using a closed control loop (19) in which the filter temperature (Ts) is compared to a pre-set target temperature (Tt).

10. The method of claim 9, wherein said target temperature (Tt) is set lower at the beginning (t2-t3) of the main portion (t2-t5) than in the ignition portion (t1-t2).

11. The method of one of claims 9 to 10, comprising the steps of judging whether the engine is in a low idle state or in a load state, and if the engine is detected to be in the low idle state (t2a), setting the target temperature (Tt) lower than in the load state.

12. The method of claim 11, wherein during the low idle state (t2a-t2b) the target temperature is gradually decreased.

13. The method of claim 11 or 12, wherein the target temperature is gradually increased when returning from the low idle state to the load state.

14. A data processor program product comprising a data carrier in which program instructions for enabling a data processor to carry out the method of one of claims 1 to 13 are recorded in machine-readable form.

15. A control apparatus for controlling operation of a particulate filter (12) in the exhaust system of an internal combustion engine so that the operation comprises a filtering phase in which particles from exhaust gas of the combustion engine are collected in the filter, and a filter cleaning phase (t1-t5), at which soot combustion is assumed to be under progress, in which the filter (12) is held in a temperature range in which particles collected in the filter (12) are burnt, **characterized in that** the control apparatus (14) is adapted to control the temperature (Ts) at an input port of the filter (12) to be lower at the beginning (t2-t3) of a main portion (t2-t5) of the filter cleaning phase (t1-t5) than in an ignition portion (t1-t2) of the filter cleaning phase prior to said main portion (t2-t5).

## Patentansprüche

1. Verfahren für den Betrieb eines Partikelfilters (12) in dem Abgassystem eines Verbrennungsmotors, mit einer Filterphase, in der Partikel aus dem Abgas des Verbrennungsmotors in dem Filter (12) gesammelt werden, und einer Filterreinigungsphase (t1 - t5), während der der Filter (12) in einem Temperaturbereich gehalten wird, in dem die in dem Filter (12) gesammelten Partikel verbrannt werden, **dadurch gekennzeichnet, dass** die Filterreinigungsphase (t1 - t5) einen Hauptabschnitt (t2 - t5) und vor dem Hauptabschnitt (t2 - t5) einen Entzündungsabschnitt (t1 - t2) umfasst, wobei man annehmen kann, dass die Russverbrennung zu diesem Zeitpunkt im Gange ist, und dass die Temperatur (Ts) an einer Eingabeöffnung des Filters (12) zu Beginn (t2 - t3) des Hauptabschnitts (t2 - t5) niedriger eingeregelt wird als in dem Entzündungsabschnitt (t1 - t2).

2. Verfahren nach Anspruch 1, wobei die Dauer des Entzündungsabschnitts (t1 - t2) nicht mehr als eine Minute beträgt.

3. Verfahren nach Anspruch 1 oder 2, wobei die Filtertemperatur (Ts) während des Entzündungsabschnitts (t1 - t2) um zumindest 50 °C höher als zu Beginn (t2 - t3) des Hauptabschnitts ist.

4. Verfahren nach den Ansprüchen 1 bis 3, wobei eine durch ein Ausschalten des Motors unterbrochene (t2b) Reinigungsphase nach dem Wiedereinschalten (t2c) des Motors wieder begonnen wird.

5. Verfahren nach Anspruch 4, wobei beim Einschalten des Motors entschieden wird, die Filterreinigungsphase erneut zu starten oder nicht, gemäß einer geschätzten Partikellast zum Zeitpunkt (t2b, t2c) der Unterbrechung.

6. Verfahren nach einem der vorhergehenden Ansprüche, wobei die Partikellast des Filters (12) geschätzt und ein Zielwert (Tt) für die Filtertemperatur (Ts) gemäß der geschätzten Partikellast festgelegt wird.

7. Verfahren nach einem der vorhergehenden Ansprüche, wobei der Filter (12) durch die Verbrennung von Restbrennstoff, der in dem Motorabgas enthalten ist, in einem Katalysator (9), der sich in dem Abgassystem zwischen dem Motor und dem Partikelfilter (12) befindet, erhitzt wird.

8. Verfahren nach Anspruch 7, wobei die Menge des Restbrennstoffs durch das dosierte Einspeisen von Brennstoff in eine Brennkammer (1) des Motors nach der Entzündung reguliert wird.

9. Verfahren nach Anspruch 7 oder 8, wobei die Menge des Restbrennstoffs durch einen geschlossenen Regelkreis (19) geregelt wird, in dem die Filtertemperatur (Ts) mit einer vorgegebenen Zieltemperatur (Tt) verglichen wird.

10. Verfahren nach Anspruch 9, wobei die Zieltemperatur (Tt) zu Beginn (t2 - t3) des Hauptabschnitts (t2 - t5) niedriger festgesetzt wird als in dem Entzündungsabschnitt (t1 - t2).

11. Verfahren nach einem der Ansprüche 9 bis 10, welches die Schritte umfasst, zu beurteilen, ob sich der Motor in einem niedrigen Leerlaufzustand oder einem Lastzustand befindet, und wenn erkannt wird, dass der Motor sich in dem niedrigen Leerlaufzustand (t2a) befindet, die Zieltemperatur (Tt) niedriger als in dem Lastzustand festzusetzen.

12. Verfahren nach Anspruch 11, wobei im niedrigen Leerlaufzustand (t2a - t2b) die Zieltemperatur graduell abgesenkt wird.

13. Verfahren nach Anspruch 11 oder 12, wobei die Zieltemperatur beim Übergang vom niedrigen Leerlauf in den Lastzustand graduell erhöht wird.

14. Datenverarbeitungsprogrammprodukt mit einem Datenträger, auf dem Programmanweisungen in maschinenlesbarer Form aufgezeichnet sind, die dafür bestimmt sind, dem Datenprozessor die Durchführung des Verfahrens nach einem der Ansprüche 1 bis 13 zu ermöglichen.

15. Steuerungsvorrichtung für die Steuerung des Betriebs eines Partikelfilters (12) in dem Abgassystem eines Verbrennungsmotors, sodass der Betrieb eine Filterphase umfasst, in der Partikel aus dem Abgas des Verbrennungsmotors in dem Filter gesammelt werden, und eine Filterreinigungsphase (t1 - t5), in der der Filter (12) in einem Temperaturbereich gehalten wird, in dem die in dem Filter (12) gesammelten Partikel verbrannt werden, **dadurch gekennzeichnet, dass** die Filterreinigungsphase (t1 - t5) einen Hauptabschnitt (t2 - t5) und vor dem Hauptabschnitt (t2 - t5) einen Entzündungsabschnitt (t1 - t2) umfasst, wobei man annehmen kann, dass die Russverbrennung zu diesem Zeitpunkt im Gange ist, und wobei der Filter (12) in einem Temperaturbereich gehalten wird, in dem in dem Filter (12) gesammelten Partikel verbrannt werden, **dadurch gekennzeichnet, dass** die Regelvorrichtung (14) dafür eingerichtet ist, die Temperatur (Ts) an einer Eingabeöffnung des Filters (12) zu Beginn (t2 - t3) des Hauptabschnitts (t2 - t5) der Filterreinigungsphase (t1 - t5) niedriger einzuregeln als in einem Entzündungsabschnitt (t1 - t2) der Filterreinigungsphase vor dem Hauptabschnitt (t2 - t5).

## Revendications

1. Une méthode de fonctionnement pour filtre à particules (12) dans le système d'échappement d'un moteur à combustion interne, comprenant une phase de filtration au cours de laquelle les particules issues des gaz d'échappement en provenance du moteur sont récupérées (12), et une phase de nettoyage du filtre (t1-t5) au cours de laquelle le filtre (12) est maintenu à un niveau de température dans lequel les particules collectées dans le filtre (12) sont brûlées , **caractérisée en ce que** la phase que la phase de nettoyage du filtre (t1-t5) comprend une séquence principale (t2-t5) ainsi qu'une séquence d'allumage (t1-t2), au cours de laquelle il est supposé que la combustion de la suie est en cours, précédent la séquence principale (t2-t5), et que la température (Ts) à l'entrée du filtre (120 est contrôlée de manière à être moins importante au début de la séquence principale (t2-t3) qu'au cours de la séquence d'allumage (t1-t2).

2. La méthode de la revendication 1, au cours de laquelle la durée dite d'allumage (t1-t2) ne dépasse pas une minute.

3. La méthode des revendications 1 ou 2, au cours de laquelle la température du filtre (Ts) au cours de la séquence dite d'allumage (t1-t2) est plus importante d'au moins 50* C par rapport au début de la séquence principale (t2-t3).

4. La méthode d'une des revendications 1 à 3, au cours de laquelle une phase de nettoyage du filtre est interrompue (t2b) par l'extinction du moteur, puis relancée après redémarrage (t2c) du moteur.

5. La méthode de la revendication 4, au cours de laquelle, après l'allumage du moteur, il est décidé de relancer ou de ne pas relancer la phase de nettoyage du filtre, en fonction de la charge estimée de particules au moment (t2b, t2c) de l'arrêt.

6. La méthode d'une des revendications précédentes au cours de laquelle la charge de particules du filtre (12) est estimée et au cours de laquelle une valeur cible (Tt) correspondant à la température du filtre (Ts0) est définie au regard de la charge estimée de particules.

7. La méthode d'une des revendications précédentes, au cours de laquelle le filtre (12) est chauffé par la combustion des résidus de carburant contenus dans les gaz d'échappement du moteur au niveau d'un catalyseur (9) situé dans le système d'échappement, entre le moteur et le filtre à particules (12).

8. La méthode de la revendication 7, au cours de laquelle la quantité de carburant résiduel est contrôlée par la prise de mesure du carburant situé dans la chambre de combustion (1) du moteur après allumage.

9. La méthode des revendications 7 ou 8, au cours de laquelle la quantité de carburant résiduel est contrôlée via une boucle de contrôle rapproché (19) dans laquelle la température du filtre est comparée à une température cible prédéterminée.

10. La méthode de la revendication 9, au cours de laquelle la température dite cible (Tt) est déterminée de manière à être plus faible au début (t2-t3) de la séquence principale (t2-t5) que durant la séquence d'allumage (t1-t2).

11. La méthode d'une des revendications 9 à 10, comprenant les étapes d'une analyse consistant à vérifier si le moteur est en phase inactive ou en phase de charge et, s'il est détecté que ce dernier est en phase inactive (t2a), à définir la température cible (Tt) de manière à ce que cette dernière soit moins importante que durant la phase de charge.

12. La méthode de la revendication 11, au cours de laquelle durant la phase d'inactivité du moteur (t2a-t2b) la température cible est graduellement baissée.

13. La méthode des revendications 11 ou 12, au cours de laquelle la température cible est graduellement augmentée après le passage d'un état inactif à une phase de charge.

14. Un programme de traitement des données comprenant un système de transmission des données dans lequel les instructions permettant de permettre au processeur de prendre en charge la méthode des revendications 1 à 13 sont enregistrées sous une forme permettant d'être traitées par une machine par la suite.

15. Un système de contrôle du fonctionnement du filtre à particules (12) dans le système d'échappement d'un moteur à combustion interne, afin que le déroulement du processus comprenne une phase de filtrage dans laquelle les particules provenant des gaz issus de la combustion au sein du moteur sont récupérées dans le filtre, et une phase de nettoyage du filtre (t1-t5), au cours de laquelle la combustion des suies est considérée comme étant en cours, durant laquelle le filtre (12) est maintenu dans une fourchette de températures permettant au particules récoltées dans le filtre (12) d'être brûlées, **caractérisée en ce que** le système de contrôle (14) est adapté de manière à contrôler la température (Ts) à l'entrée du filtre (12), cette dernière étant censée être plus faible au début (t2-t3) de la séquence principale (t2-t5) de la phase de nettoyage du filtre (t1-t5) que lors de la séquence d'allumage (t1-t2) de la phase de nettoyage du filtre précédent ladite séquence principale (t2-t5).
